# EUROPÄISCHE PATENTSCHRIFT

(11) **EP 0 819 598 B1**
(45) Veröffentlichungstag und Bekanntmachung des Hinweises auf die Patenterteilung: **16.08.2001**
(21) Anmeldenummer: 97111829.4
(22) Anmeldetag: 13.07.1997
(51) Int. Cl.: B62D 7/16, C25D 3/22, F16C 11/06, C23C 2/00, C23C 28/00

(54) **Kugelgelenk und Verfahren zum Beschichten desselben**
Ball joint and process for coating the same
Joint à rotule et procédé pour son revêtement

(30) Priorität: 16.07.1996 DE 19628544
(43) Veröffentlichungstag der Anmeldung: 21.01.1998
(73) Patentinhaber: Sachsenring Automobiltechnik AG, 08058 Zwickau (DE)
(72) Erfinder: Schürer, Thomas, Dipl.-Ing., 08058 Zwickau (DE); Vogel, Jochen, Dipl.-Ing. (FH), 36119 Neuhof (DE)
(74) Vertreter: Hufnagel, Walter, Dipl.-Ing., Dipl.-Wirtsch.-Ing.

(56) Entgegenhaltungen:
- EP-A- 0 026 757
- GB-A- 2 136 020
- US-A- 3 300 346
- US-A- 4 335 924
- US-A- 5 092 704
- PATENT ABSTRACTS OF JAPAN vol. 015, no. 461 (C-0887), 22.November 1991 & JP 03 197698 A (T R W S I KK), 29.August 1991,
- PATENT ABSTRACTS OF JAPAN vol. 012, no. 296 (M-731), 12.August 1988 & JP 63 072913 A (MUSASHI SEIMITSU IND CO LTD), 2.April 1988,
- PATENT ABSTRACTS OF JAPAN vol. 014, no. 491 (M-1040), 25.Oktober 1990 & JP 02 200508 A (HONDA MOTOR CO LTD), 8.August 1990,

## Beschreibung

Die vorliegende Erfindung bezieht sich auf ein Kugelgelenk gemäß dem Oberbegriff des Anspruchs 1 sowie auf ein Verfahren zum Beschichten desselben gemäß dem Oberbegriff des Anspruchs 5.

Kugelgelenke der genannten Art (siehe zum Beispiel die US-A-5072704) werden vor allem in der Automobiltechnik, beispielsweise bei Lenkerachsen oder dgl., eingesetzt. Diese Kugelgelenke sind wegen ihrer Anordnung besonders korrodierenden Umweltbedingungen ausgesetzt. Es besteht daher das Bedürfnis, die Kugelgelenke möglichst zu schützen, um eine lange Lebensdauer gewährleisten zu können. Derzeit werden solche Kugelgelenke aus lackbeschichteten Einzelelementen zusammengebaut. Bei dem Einrollieren der die Kugelschale festsetzenden Verschlußkappe wird diese Lackschicht zerstört und muß daher nach der Endmontage nachgebessert werden.

Mit der Erfindung soll die Aufgabe gelöst werden, Kugelgelenke der eingangs genannten Art so zu schützen, daß sie auch bei hoher Belastung mit stark korrosiv wirkenden Medien nicht oder nicht ungebührlich korrodieren, so daß sie nicht vorzeitig unbrauchbar werden, was im ungünstigsten Fall zu einem Unfall führen könnte. Ferner soll gleichzeitig die Fertigungszeit gesenkt und eine Qualitätsverbesserung erreicht werden.

Gelöst wird diese Aufgabe durch die Merkmale bzw. Verfahrensschritte der Ansprüche 1 und 5.

Mit der Erfindung wird ein sehr guter Korrosionsschutz gewährleistet. Aufgrund der relativ kleinen beschichteten Fläche werden Beschichtungsmaterial sowie Material- und Herstellungskosten eingespart. Die Herstellung erfolgt zeit- und kostensparend, da alle Behandlungs- und Beschichtungsvorgänge erst nach der Endmontage des Kugelgelenks bei bereits angebrachter bzw. angebrachten Manschette(n) und bereits eingebrachtem Schmiermittel durchgeführt werden. Dies ist nach der Endmontage deshalb möglich, weil durch die bereits aufgebrachte(n) Dichtungsmanschette(n) und die gegebenenfalls vorhandene einrollierte Verschlußkappe eine fett- und wasserdichte Einheit erhalten wird, so daß die gesamte Montageeinheit der galvanischen Beschichtung und der dazu erforderlichen Arbeitsprozesse unterzogen werden kann.

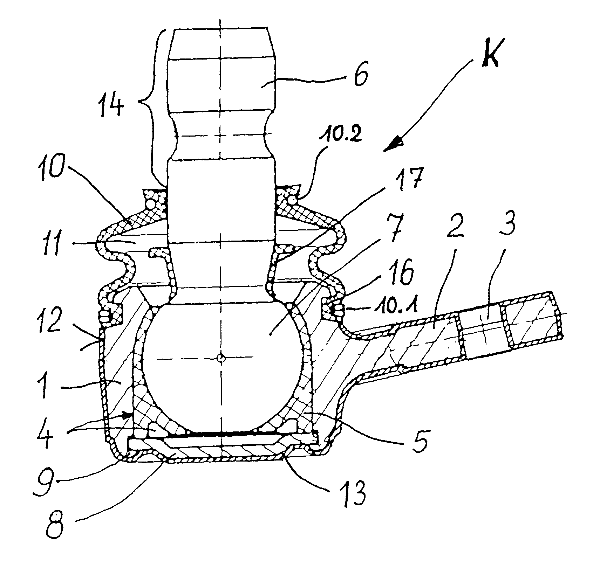

Weitere vorteilhafte Einzelheiten der Erfindung sind in den Unteransprüchen angegeben und werden nachfolgend anhand eines in der Zeichnung veranschaulichten Ausführungsbeispiels näher beschrieben.

Die einzige Fig. zeigt das Kugelgelenk von der Seite, teilweise im Schnitt.

In der Zeichnung ist mit 1 ein Kugelgehäuse eines Kugelgelenks K bezeichnet. Dieses Kugelgehäuse 1 besteht aus Festigkeitsgründen bevorzugt aus Stahl. Grundsätzlich sind aber auch andere Metalle verwendbar. Am Kugelgehäuse 1 ist wenigstens ein Befestigungsmittel, hier in Form eines seitlich abstehenden Befestigungsflansches 2 vorgesehen.

Der Befestigungsflansch 2 besitzt mehrere Öffnungen 3, über die er beispielsweise an der Karosserie eines Kraftfahrzeuges befestigt, insbesondere angeschraubt, werden kann.

In einer Aussparung 4 des Kugelgehäuses 1 ist eine Kugelschale 5 aus hartelastischem Kunststoff eingesetzt, in der eine an einem Kugelzapfen 6 vorhandene Kugel 7 reibungsarm in einem bestimmten Winkelbereich allseitig schwenkbar gelagert ist. Die Kugelschale 5 ist durch eine Verschlußkappe 8 lagefixiert, indem der umgebördelte Rand 9 des Kugelgehäuses 1 die Verschlußkappe 8 gegen die Kugelschale 5 drückt.

Das Kugelgelenk K ist nach außen hin durch eine zwischen Kugelgehäuse 1 und Kugelzapfen 6 eingespannte Dichtungsmanschette 10 abgedichtet. Das Einspannen der Dichtungsmanschette 10 erfolgt über Spannringe 10.1 und 10.2 aus einem hochlegierten, nichtrostenden Stahl, da herkömmlicher Federstahl bei den angewendeten Prozessen korrodieren würde. Zugleich dient der durch die Dichtungsmanschette 10 eingeschlossene Raum 11 als Vorratsbehälter für ein Schmiermittel für die Kugel 7. Als Material für die Dichtungsmanschette 10 ist bevorzugt ein Elastomer, insbesondere ein synthetischer Kautschuk, beispielsweise auf der Basis von Chloropren, vorgesehen. Eine zu der Dichtungsmanschette 10 koaxial angeordnete innere Dichtungsmanschette ist mit 17 bezeichnet.

Erfindungsgemäß ist das Kugelgehäuse 1 auf der durch die äußere Dichtungsmanschette 10 noch frei bleibenden äußeren Oberfläche 12 des Kugelgehäuses 1 mit einer Antikorrosionsschicht 13 aus einer galvanisch aufgebrachten Schicht aus Metall oder einer Metall-Legierung, insbesondere einer Eisen-Zink-Legierung (FeZn), beschichtet. Diese Antikorrosionsschicht 13 ist in der Zeichnung gestrichelt eingezeichnet. Die Dicke der Antikorrosionsschicht 13 ist zur besseren Verdeutlichung wesentlich vergrößert dargestellt. Die tatsächliche Schichtdicke liegt im Bereich von etwa 5 bis 50 µm, insbesondere von etwa 8 bis 20 *µ*m.

Die Beschichtung des Kugelgelenks K mit der Antikorrosionsschicht 13 erfolgt nach folgendem Verfahren:

Das aus den Teilen Kugelgehäuse 1, Kugelschale 5, Kugelzapfen 6 mit Kugel 7, Verschlußkappe 8 und Dichtungsmanschette 10, einschließlich eines in den Raum 11 eingebrachten Schmiermittels fertig montierte Kugelgelenk K wird, gegebenenfalls einschließlich des von der Dichtungsmanschette 10 nicht bedeckten freien Abschnitts 14 des Kugelzapfens 6, bis über den Anfangsrand 16 der Dichtungsmanschette 10 zunächst in einem Entfettungsbad für eine Zeitdauer von etwa 15 bis 25 min, insbesondere von etwa 20 min, bei einer Temperatur von etwa 50° bis 80°C, insbesondere von etwa 60° bis 70°C, entfettet. Als Lösungsmittel dient hierbei ein fettlösender Kohlenwasserstoff oder insbesondere heißes Wasser. Nach einem Spülprozeß mit Wasser bei Raumtemperatur erfolgt eine elektrolytische Oberflächenaufrauhung der freien äußeren Oberfläche 12 des Kugelgehäuses 1 durch einen elektrolytischen Beizprozeß, beispielsweise in einer Säure oder Lauge. Hierzu wird das Kugelgelenk K am Kugelgehäuse 1 gefaßt und vollständig in das Beizbad getaucht. Dieser Verfahrensschritt dauert etwa 15 min bis 25 min, insbesondere etwa 20 min, bei einer Temperatur von etwa 25° bis 30°C, vorzugsweise bei 28°C. Anschließend wird mit Wasser oder mit einem Neutralisationsmittel bei Raumtemperatur gespült. Hierauf folgt zwecks Rest-Elektrolytentfernung nochmals ein Spülvorgang mit Wasser und/oder mit einem Lösungsmittel und/oder mit einem Neutralisationsmittel während beispielsweise etwa 5 min bis 10 min bei etwa 40° bis 50°C, insbesondere bei etwa 45°C. Anschließend erfolgt ein weiterer Spülvorgang mit Wasser. Danach wird durch Dekapieren bzw. Ätzen die Oberfläche 12 des Kugelgehäuses 1 für den späteren galvanischen Auftrag der FeZn-Schicht oder einer anderen metallischen Schicht aktiviert. Dieser Auftrag wird nach dem auf das Beizen folgenden Spülvorgang mit Wasser, während einer Zeitdauer von etwa 40 min bis 90 min, insbesondere von etwa 65 min, durchgeführt. Anschließend wird mit Wasser gespült und dann die freie Oberfläche 12 des Kugelgehäuses 1 schwarz-chromatiert. Nach dem Spülen mit Wasser wird das Kugelgelenk K getrocknet. Hierzu wird beispielsweise das Wasser mit hohem Luftdruck abgeblasen.

Die Entfettung des fertig montierten Kugelgelenks K kann auch in zwei oder mehr Verfahrensschritten in zwei oder mehr unterschiedlichen Lösungsmitteln durchgeführt werden.

Auch können anstelle einer Manschette 10 gegebenenfalls mehrere Manschetten bzw. Teilmanschetten, beispielsweise auch eine innere Manschette 17, vorgesehen sein.

## Patentansprüche

1. Kugelgelenk (k), bestehend aus einem Kugelgehäuse (1) aus Metall, insbesondere Stahl, mit angeformten Befestigungsmitteln (2), einer in einer Aussparung des Kugelgehäuses angeordneten Kugelschale (5) aus Kunststoff, in der eine an einem Kugelzapfen (6) vorhandene Kugel (7) schwenkbar gelagert ist sowie mit mindestens einer zwischen dem Kugelzapfen (6) und dem Kugelgehäuse (1) vorgesehenen Dichtungsmanschette (10), dadurch gekennzeichnet, daß die nicht von der Dichtungsmanschette (10) abgedeckte äußere Oberfläche (12) des Kugelgehäuses (1), gegebenenfalls einschließlich des nicht von der Dichtungsmanschette (10) bedeckten freien Abschnitts (14) des Kugelzapfens (6), eine galvanisch aufgebrachte Schicht (13) aus Metall oder aus einer Metall-Legierung aufweist.

2. Kugelgelenk nach Anspruch 1, dadurch gekennzeichnet, daß die galvanisch aufgebrachte Schicht (13) aus einer Zink-Eisen-Legierung besteht.

3. Kugelgelenk nach Anspruch 1 oder 2, dadurch gekennzeichnet, daß die Dichtungsmanschette (10) durch Spannringe (10.1 und 10.2) aus hochlegiertem, nichtrostendem Stahl am Kugelgehäuse (1) bzw. am Kugelzapfen (6) dicht angebracht ist.

4. Kugelgelenk nach einem der Ansprüche 1 bis 3, dadurch gekennzeichnet, daß das Kugelgehäuse (1) auf zwei einander gegenüberliegenden Seiten offen und von einer Seite aus die Kugelschale (5) mit eingesetzter Kugel (7) gegen einen Anschlag geführt ist und auf dieser Seite eine Verschlußkappe (8) eingebracht und durch den umgebördelten Rand (9) des Kugelgehäuses (1) lagefixiert ist, wodurch die Verschlußkappe (8) ihrerseits die Kugelschale (5) lagefixiert.

5. Verfahren zum Beschichten eines Kugelgelenks gemäß einem der Ansprüche 1 bis 4, dadurch gekennzeichnet, daß das fertig montierte Kugelgelenk (K), einschließlich Manschette (10) bzw. Manschetten (10, 17), daß heißt die freie Oberfläche (12) des Kugelhäuses (1), gegebenenfalls einschließlich des von der Dichtungsmanschette (10) nicht bedeckten Abschnitts (14) des Kugelzapfens (6), bis über den Anfangsrand (16) der Dichtungsmanschette (10) durch Tauchen in die einzelnen Bäder folgenden Verfahrensschritten unterzogen wird:
1- Entfetten in Wasser und/oder in einem oder in mehreren Lösungsmittel(n) bei einer Temperatur von etwa 50° - 80°C, insbesondere von etwa 60° - 70°C,
2- Spülen mit Wasser,
3- elektrolytisches Beizen bei einer Temperatur von etwa 25° - 35°C, insbesondere bei 28°C,
4- Spülen mit Wasser und/oder mit Lösungsmittel(n) bei Raumtemperatur,
5- - Rest-Elektrolytentfernung mit Wasser und/oder mit Lösungsmittel(n) und/oder Neutralisation bei maximal etwa 45°C,
6- Spülen mit Wasser,
7- Dekapieren beziehungsweise Aktivieren der freien Oberfläche (12) des Kugelgehäuses (1) durch einen Ätzprozeß,
8- Spülen mit Wasser,
9- galvanisches Auftragen einer Metall-Legierung, insbesondere einer Zink-Eisen-Legierung,
10- Spülen mit Wasser,
11- Schwarz-Chromatieren der Kugelgehäuse-Oberfläche (12),
12- Spülen mit Wasser.

6. Verfahren nach Anspruch 5, dadurch gekennzeichnet, daß die Verfahrensschritte 2-, 4- und 6- bis 12 bei Raumtemperatur durchgeführt werden.

7. Verfahren nach Anspruch 5 oder 6, dadurch gekennzeichnet, daß der Verfahrensschritt 1- während einer Zeitdauer von etwa 15 bis 25 min, insbesondere von etwa 20 min, durchgeführt wird.

8. Verfahren nach einem der Ansprüche 5 bis 7, dadurch gekennzeichnet, daß der Verfahrensschritt 3- während einer Zeitdauer von etwa 15 bis 25 min, insbesondere von etwa 20 min, durchgeführt wird.

9. Verfahren nach einem der Ansprüche 5 bis 8, dadurch gekennzeichnet, daß der Verfahrensschritt 5- während einer Zeitdauer von etwa 5 bis 10 min durchgeführt wird.

10. Verfahren nach einem der Ansprüche 5 bis 9, dadurch gekennzeichnet, daß der Verfahrensschritt 9- während einer Zeitdauer von etwa 50 bis 70 min, insbesondere von etwa 65 min, durchgeführt wird.

## Claims

1. Ball joint (K), consisting of a ball housing (1) made of metal, in particular steel, with fastening means (2) formed thereon, a ball shell (5) made of plastic which is disposed in a recess of the ball housing and in which a ball (7) present on a ball pin (6) is mounted pivotably, and with at least one sealing gaiter (10) provided between the ball pin (6) and the ball housing (1), characterised in that the outer surface (12) of the ball housing (1) not covered by the sealing gaiter (10), possibly including the free portion (14) of the ball pin (6) not covered by the sealing gaiter (10), exhibits a galvanically applied coating (13) of metal or of a metal alloy.

2. Ball joint according to claim 1, characterised in that the galvanically applied coating (13) consists of a zinc and iron alloy.

3. Ball joint according to claim 1 or 2, characterised in that the sealing gaiter (10) is attached sealingly to the ball housing (1) and the ball pin (6) by clamping rings (10.1 and 10.2) made of high alloy stainless steel.

4. Ball joint according to one of claims 1 to 3, characterised in that the ball housing (1) is open on two opposing sides and from one side the ball shell (5) with the inserted ball (7) is guided against a stop and on this side a sealing cap (8) is introduced and fixed in position by the flattened edge (9) of the ball housing (1), through which the sealing cap (8) for its part fixes the ball shell (5) in position.

5. Process for coating a ball joint according to one of claims 1 to 4, characterised in that the finally assembled ball joint (K), including the gaiter (10) or gaiters (10, 17), which means the free surface (12) of the ball housing (1), possibly including the portion (14) of the ball pin (6) not covered by the sealing gaiter (10), to over the starting edge (16) of the sealing gaiter (10), is subjected to the following process steps by immersion in the individual baths:
1 - degreasing in water and/or in one or more solvents at a temperature of approximately 50° - 80°C, in particular of approximately 60° - 70°C,
2 - rinsing with water,
3 - electrolytic pickling at a temperature of approximately 25° - 35°C, in particular at 28°C,
4 - rinsing with water and/or with solvent(s) at ambient temperature,
5 - removal of the remaining electrolyte with water and/or with solvent(s) and/or neutralisation at a maximum of approximately 45°C,
6 - rinsing with water,
7 - pickling or activation of the free surface (12) of the ball housing (1) by an etching process,
8 - rinsing with water,
9 - galvanic application of a metal alloy, in particular a zinc and iron alloy,
10 - rinsing with water,
11 - black chromating of the ball housing surface (12),
12 - rinsing with water.

6. Process according to claim 5, characterised in that the process steps 2-, 4- and 6- to 12 are carried out at ambient temperature.

7. Process according to claim 5 or 6, characterised in that process step 1- is carried out for a time of approximately 15 to 25 minutes, in particular of approximately 20 minutes.

8. Process according to one of claims 5 to 7, characterised in that process step 3- is carried out for a time of approximately 15 to 25 minutes, in particular of approximately 20 minutes.

9. Process according to one of claims 5 to 8, characterised in that process step 5- is carried out for a time of approximately 5 to 10 minutes.

10. Process according to one of claims 5 to 9, characterised in that process step 9- is carried out for a time of approximately 50 to 70 minutes, in particular of approximately 65 minutes.

## Revendications

1. Joint à rotule (K) composé d'un carter de rotule métallique (1), de préférence en acier, avec des moyens de fixation (2) mis en forme, d'une coquille (5) en plastique disposée dans une cavité du carter de rotule, et dans laquelle est montée une rotule (7) orientable faisant partie d'un pivot de rotule (6), ainsi que d'au moins une manchette d'étanchéité (10) disposée entre le pivot à rotule (6) et le carter (1),
caractérisé en ce que
la surface externe (12) du carter (1) non recouverte par la manchette (10), y compris éventuellement celle du segment libre (14) du pivot de rotule (6) non recouverte par la manchette (10), est revêtue d'une couche (13) de métal ou d'alliage métallique appliquée par galvanisation.

2. Joint à rotule selon la revendication 1,
caractérisé en ce que
la couche métallique (13) appliquée par galvanisation se compose d'un alliage fer-zinc.

3. Joint à rotule selon la revendication 1 ou 2,
caractérisé en ce que
la manchette d'étanchéité (10) est appliquée de façon étanche sur le carter (1) ou sur le pivot à rotule (6), à l'aide de colliers de serrage (10.1, 10.2) en acier inoxydable fortement allié.

4. Joint à rotule selon l'une quelconque des revendications 1 à 3,
caractérisé en ce que
le carter (1) est ouvert sur deux côtés opposés, et guidé par un côté de l'extérieur de la coquille (5) au moyen de la rotule (7) incorporée contre une butée, et sur ce côté est monté un capot (8) fixé en position par le bord rabattu (9) du carter (1), ce capot (8) maintenant en position à son tour la rotule (5).

5. Procédé de revêtement d'un joint à rotule selon l'une quelconque des revendications 1 à 4,
caractérisé en ce que
le joint à rotule (K) définitivement assemblé, y compris la manchette (10), ou les manchettes (10, 17), c'est-à-dire de la surface libre (12) du carter (1), y compris éventuellement celle du segment (14) du pivot de rotule (6) non recouverte par la manchette d'étanchéité (10), jusqu'au-dessus du bord d'attaque (16) de la manchette d'étanchéité (10), est soumis aux phases de traitement suivantes, par trempage dans les différents bains :
1- dégraissage à l'eau et/ou dans un ou plusieurs solvants à une température d'environ 50° à 80°C, et de préférence de 60° à 70°C environ,
2- rinçage à l'eau,
3- décapage électrolytique à une température de 25° à 35°C environ, et de préférence à 28°C,
4- rinçage à l'eau ou par solvants, à la température ambiante,
5- élimination des résidus électrolytiques à l'eau et/ou par solvant(s) et/ou neutralisation à une température maximale de 45°C environ,
6- rinçage à l'eau,
7- décapage ou activation de la surface libre (12) du carter (1) par un procédé corrosif,
8- rinçage à l'eau,
9- application galvanique d'un alliage métallique, de préférence un alliage fer-zinc,
10- rinçage à l'eau,
11- chromatage noir de la surface du carter (12),
12- rinçage à l'eau.

6. Procédé selon la revendication 5,
caractérisé en ce que
les phases 2, 4, et 6 à 12 du procédé sont exécutées à la température ambiante.

7. Procédé selon la revendication 5 ou 6,
caractérisé en ce que
la phase 1 est exécutée pendant une durée de 15 à 25 minutes environ, en particulier pendant 20 minutes environ.

8. Procédé selon l'une quelconque des revendications 5 à 7,
caractérisé en ce que
la phase 3 est exécutée pendant une durée de 15 à 25 minutes environ, en particulier pendant 20 minutes environ.

9. Procédé selon l'une quelconque des revendications 5 à 8,
caractérisé en ce que
la phase 5 est exécutée pendant une durée de 5 à 10 minutes environ.

10. Procédé selon l'une quelconque des revendications 5 à 9,
caractérisé en ce que
la phase 9 est exécutée pendant une durée de 50 à 70 minutes environ, en particulier pendant 65 minutes environ.
